# EUROPEAN PATENT SPECIFICATION

(11) **EP 2 501 469 B1**
(45) Date of publication and mention of the grant of the patent: **28.02.2018**
(21) Application number: 10798257.1
(22) Date of filing: 16.11.2010
(51) Int. Cl.: B01J 20/20, F25D 3/12, B01J 20/22, B01J 20/28, B01J 20/30

(54) **MATERIAL FOR ADSORPTION AND CAPTURE OF CO2 AND USE THEREOF IN THE STORAGE OF CARBON DIOXIDE**
MATERIAL ZUR ADSORPTION UND ABSCHEIDUNG VON CO2 SOWIE DIE VERWENDUNG DAVON ZUR SPEICHERUNG VON CO2
MATÉRIAU POUR L'ADSORPTION ET LA CAPTURE DE CO2 AINSI QUE L'UTILISATION DUDUIT MATÉRIAU DANS ACCUMULATION DE CO2

(30) Priority: 17.11.2009 IT MI20092022
(43) Date of publication of application: 26.09.2012
(73) Proprietor: Grafco2 srl, 20122 Milano (IT)
(72) Inventor: MASTRODONATO, Marco, 20125 Milano (IT); PRATI, Massimo, 21047 Saronno (Varese) (IT); MICU, Ioana Veronica, 20037 Paderno Dugnano (Milano) (IT); COMOTTI, Angiolina, 20122 Milano (IT)
(74) Representative: Minoja, Fabrizio
(86) International application number: PCT/EP2010/006949
(87) International publication number: WO 2011/060912

(56) References cited:
- EP-A1- 0 308 095
- WO-A1-02/25190
- US-A- 5 736 076
- Kolak, J J; Burruss R C: "the Effect of Coal Rank on the Physicochemical Interactions Between Coal and CO2 - Implications for CO2 Storage in Coal Beds", , 30 May 2005 (2005-05-30), pages 1-4, XP002620440, Retrieved from the Internet: URL:http://web.archive.org/web/20050530062 920/http://uregina.ca/ghgt7/PDF/papers/pos ter/121.pdf [retrieved on 2011-02-02]

## Description

This invention relates to a material capable of adsorbing carbon dioxide which is obtainable by isostatic compression of a mixture of a carbonious material selected from fossil carbon and/or graphite and a binder.

### Background to the invention

The problem of maintaining cold conditions for sanitary, food and similar applications is particularly felt, and a variety of solutions have been proposed.

Containers which contain materials that accumulate cold such as aqueous solutions of inorganic salts (calcium chloride, sodium chloride) or of glycols are known in particular, and have long been used. Said containers are cooled, typically by placing them in a freezer or refrigerator, and then placed in contact with the articles to be cooled or stored, or inserted into cooler bags in which they ensure low temperatures for several hours. Examples of said containers are described in US 2,061,427 and US 5,557,943. US 5,736,076 describes a material obtained by compression molding of a mixture of graphite and sucrose as binder, followed by heat treatment of the molded product at a temperature of between 300°C and 600°C. The material is described as being usable as heat transfer or heat exchanger material.

WO 02/25190 discloses a composition for transferring heat to or from fluids consisting of activated carbon, graphite and a synthetic polymer (poly tertafluoro ethylene) as a binder. Carbon dioxide in gas form is absorbed onto the surface of the material. A short term cooling effect is obtained by the release of the carbon dioxide from the material upon opening the container in which it is stored. The effect may be useful for short term cooling needs, for instance for chilling canned or bottled drinks. Long term cooling is not possible since only limited amount of gaseous carbon dioxide is absorbed on the surface only of the material.

At present, no reproducible material exists which is able to adsorb carbon dioxide in any state, particularly in the liquid state.

### Description of the invention

A material has now been found which, when treated under suitable conditions with liquid carbon dioxide in supercritical conditions, is capable of accumulating cold for very long periods, far more efficiently than the conventional materials used to date.

Said material is also able to adsorb large volumes of carbon dioxide, and can therefore also be used for the storage of said gas, an environmental problem which is particularly felt in view of the "greenhouse gas" problem.

Another possible application is the manufacture of cutting tools, because when the material in question is subjected to a number of consecutive adsorption cycles, it reaches considerable hardness values.

### Detailed description of the invention

The material to which the invention relates is defined in claim 1. The anthracite as carbonious material preferably has a particle size with particles of dimensions ranging between micron and 7 mm, with variable, irregular particle shapes. Said particle size can be obtained by grinding with conventional equipment and techniques.

The particle size of the carbonious powder can be measured with conventional instruments, based on a sieve assay.

The disaccharide is preferably sucrose or fructose, optionally in micronised form.

The carbonious material and the binder are mixed in conventional roller, blade or screw mixers at low speed, avoiding the formation of agglomerates.

The weight ratio between the carbonious material and the disaccharide binder is between 1:100 and 100:1, preferably between 15:1 and 18:1 if given characteristics are to be obtained.

The carbonious material and the disaccharide binder are assayed with conventional volumetric analysis systems, such as those equipped with strips and plates, balancing strips, slide-valves and balances or the like.

The mixture then undergoes cold isostatic compression, pressure being applied evenly in all directions so as to obtain a product with uniform density.

The homogenous mixture, the specific gravity of which is typically approx. 1.20 kg/dm³, can be distributed between steel moulds or latex, PVC or rubber bags which have the geometrical shape of the desired semi-manufactured product, taking care to distribute it evenly in the mould.

The material thus obtained is able to adsorb large volumes of carbon dioxide in a substantially irreversible way, and can be advantageously used for the storage of said gas.

The cooling and cold accumulating material is obtained by immersing the materials obtained as described above in liquid CO₂ in a scrupulously clean, dry hyperbaric tank.

The tank or cryostat can be made of AISI 304 stainless steel or the like, suitable for use with pressure vessels at low temperatures, fitted with liquid CO₂ filling valve(s), gas relief valve(s), pressure gauges, safety valve(s) dimensioned on the basis of the unit, liquid carbon dioxide discharge and recovery valve(s), cooling coil, refrigerator unit and control devices.

The time spent by the compressed material in the cryostat is at least 15 min per kg of material at an operating pressure of not less than 20 bars after the filling stage. When absorption is complete, the cryostat is depressurised by opening the gas relief valve or discharging the liquid carbon dioxide into cylinders and opening the valves.

In the cryostat the anhydride passes from the liquid state to the solid state, and the temperature falls to approx. -70°C and the solid state will remain trapped in the porosity

The proportioning of the quantity of material and carbon dioxide depends on the volume and temperature characteristics to be obtained. For example, approx. 50 g of material obtained by mixing approx. 45 g of anthracite and approx. 5 g of micronised sugar is required to maintain a temperature of between 2°C and 8°C in a volume of 20 ml. Said material is maintained at a pressure of 20 bars in the cryostat for 20 min until a final temperature of approx. -70°C has been reached in the cryostat.

The material according to the invention thus obtained can be introduced into the cavity formed by double walls of containers, made of suitable materials; the double walls dimensions increase in proportion to the dimensions of the receptacle. The material thus inserted into the receptacle will then be subjected to a pressure which, in the specific case described in the example above, will be between 2 and 5 bars.

The containers use the principle of a Dewar vessel and can be made of steel, Ni steel, plastic or non-ferrous metal resistant to low temperatures, classified according to standard UNI EN 129, preferably Ni steel of good tenacity used for cryogenic applications.

The lid of the container is fitted with inner pressure control devices, for example a valve such as a ball valve which can be regulated in the closed and open positions.

The invention is illustrated in further details by the following examples.

### Example 1

A mixture of 0.93 Kg of anthracite and 0.13 Kg of sucrose was subjected to isostatic cold pressing at a pressure of 2000 bar. Molds having a diameter of 110 mm, 230 mm thick were obtained. The specific weight was 1.20 Kg/dm³.

### Example 2

A mixture of 1.58 Kg of anthracite and 0.22 Kg of sucrose was subjected to isostatic cold pressing at a pressure of 1850 bar. Molds having a diameter of 110 mm, 230 mm thick were obtained.

### Example 3

The molds of examples 1 and 2 were placed in a cryostat into which liquid carbon dioxide was fed. The absorption was continued for 15 minutes at a pressure ranging from 10 to 30 bars. The cryostat was then opened, the dry ice in excess was mechanically separated and a matrix having a grid-like surface was obtained and tested for weight of absorbed carbon dioxide and sublimation time.

The results are reported in the Following Table

**Table**

| Example | Initial matrix weight (kg) | Final matrix weight (kg) | Final Matrix Co2 Absorbed (kg) | sublimation time of Co2 solid phase (hrs) | matrix Co2 sublimation (experimental 0.120 kg/7hrs) (hrs) | comparison between free and matrix for 4 kg Co2 (hrs) | sublimation time of Co2 solid phase for 4 kg (hrs) | prolonged Co2 sublimation time (hrs) |
|---|---|---|---|---|---|---|---|---|
| 1 | 1.04 | 1.16 | 0.12 | 0.72 | 7.00 | 233.33 | 24.00 | 209.33 |
| 2 | 1.17 | 1.27 | 0.10 | 0.60 | 5.83 | 233.33 | 24.00 | 209.33 |

## Claims

1. A material capable of adsorbing carbon dioxide obtainable by cold isostatic compression of a mixture of anthracite and a solid binder consisting of disaccharide in powder form in a weight ratio anthracite/binder comprised between 1:100 and 100:1.

2. Material as claimed in claim 1, wherein the disaccharide is sucrose in solid state.

3. Material as claimed in any of claims 1 to 2, wherein the anthracite has a particle size with particles with variable, irregular shapes of dimensions ranging between 1 µm and 7 mm, as measured by sieve assay.

4. A material as claimed in any of claims 1 to 3, treated by immersion in carbon dioxide in the liquid state.

5. Use of the material claimed in any one or more of claims 1 to 3 for the storage of carbon dioxide.

## Patentansprüche

1. Material, geeignet für die Adsorption von Kohlendioxid, erhältlich durch kalte isostatische Kompression eines Gemisches von Anthrazit und einem festen Binder, bestehend aus Disaccharid in Pulverform in einem Gewichtsverhältnis Anthrazit / Binder, umfassend zwischen 1:100 und 100:1.

2. Material, wie in Anspruch 1 beansprucht, wobei das Disaccharid Sucrose in festem Zustand ist.

3. Material, wie beansprucht in einem der Ansprüche 1 bis 2, wobei das Anthrazit eine Teilchengröße aufweist mit Teilchen mit variablen, irregulären Formen, mit Dimensionen im Bereich zwischen 1 µm und 7mm, gemessen durch Siebanalyse.

4. Material, wie beansprucht in einem der Ansprüche 1 bis 3, behandelt durch Immersion in Kohlendioxid im flüssigen Zustand.

5. Verwendung des Materials beansprucht in einem oder mehreren der Ansprüche 1 bis 3 für die Lagerung von Kohlendioxid.

## Revendications

1. Matière capable d'adsorber du dioxyde de carbone que l'on peut obtenir par compression isostatique à froid d'un mélange d'anthracite et d'un liant solide constitué par du disaccharide sous une forme pulvérulente dans un rapport pondéral anthracite/liant compris entre 1:100 et 100 :1.

2. Matière selon la revendication 1, dans laquelle le disaccharide est du saccharose à l'état solide.

3. Matière selon l'une quelconque des revendications 1 à 2, dans laquelle l'anthracite possède une granulométrie avec des particules de configurations irrégulières, variables, dont les dimensions se situent dans la plage entre 1 µm et 7 mm, telles qu'on les mesure via un titrage au tamis.

4. Matière selon l'une quelconque des revendications 1 à 3, traitée par immersion dans du dioxyde de carbone à l'état liquide.

5. Utilisation de la matière revendiquée dans l'une quelconque des revendications 1 à 3 pour le stockage du dioxyde de carbone.
